# EUROPÄISCHE PATENTSCHRIFT

(11) **EP 1 030 432 B1**
(45) Veröffentlichungstag und Bekanntmachung des Hinweises auf die Patenterteilung: **07.04.2010**
(21) Anmeldenummer: 00102363.9
(22) Anmeldetag: 04.02.2000
(51) Int. Cl.: H02K 1/17, H02K 5/12

(54) **Elektromotor**
Electric motor
Moteur électrique

(30) Priorität: 19.02.1999 DE 19906884
(43) Veröffentlichungstag der Anmeldung: 23.08.2000
(73) Patentinhaber: Continental Automotive GmbH, 30165 Hannover (DE)
(72) Erfinder: Marx, Peter, 34119 Kassel (DE); Jäger, Bernd, 34560 Fritzlar (DE); Bämpfer, Michael, 36199 Rotenburg (DE); Wilhelm, Hans-Dieter, 61267 Neu-Anspach (DE)

(56) Entgegenhaltungen:
- DE-A- 2 060 732
- GB-A- 1 314 472
- US-A- 4 636 107
- PATENT ABSTRACTS OF JAPAN vol. 009, no. 123 (E-317), 28. Mai 1985 (1985-05-28) & JP 60 009355 A (NIPPON DENSO KK), 18. Januar 1985 (1985-01-18)

## Beschreibung

Die Erfindung betrifft einen Elektromotor für eine Förderpumpe, insbesondere für eine Kraftstoffpumpe für ein Kraftfahrzeug, mit einem Rotor und einem zumindest zwei Magnetschalen aufweisenden Stator und mit einem Federelement zur Vorspannung der Magnetschalen zu deren Halterung in ihrer vorgesehenen Lage in einem Gehäuse (siehe US 4 636 107 A).

Solche Elektromotoren werden in heutigen Kraftstoffpumpen oder zum Antrieb von Kühlfluidpumpen oder Ölpumpen häufig eingesetzt und sind aus der Praxis bekannt. Hierbei bildet der Elektromotor mit der Förderpumpe eine vormontierbare bauliche Fördereinheit. Der Elektromotor wird meist von dem zu fördernden Fluid durchströmt, so daß sich die Fördereinheit sehr kompakt gestaltet.

Durch die DE 196 52 085 A1 ist ein solcher Elektromotor bekannt, bei dem die Magnetschalen von einem Federelement gegen an einem rohrförmigen Gehäuse angeordnete Anschläge gedrückt werden. Das Federelement ist aus einem bandförmigen oder drahtförmigen Federmaterial gefertigt.

Nachteilig bei dem bekannten Elektromotor ist, daß der Stator durch die Anschläge und das Federelement mehrere auf den Rotor gerichtete Absätze aufweist. Bei dem Einsatz des Elektromotors in der Förderpumpe und einer Durchströmung mit dem Fluid rufen die Absätze Verwirbelungen in dem Fluid hervor. Diese Verwirbelungen führen beispielsweise zu einer Gasblasenbildung und zu einer Verringerung des Wirkungsgrades der Förderpumpe.

Der Erfindung liegt das Problem zugrunde, einen Elektromotor der eingangs genannten Art so zu gestalten, daß er bei einem Einsatz in einer Förderpumpe besonders geringe Verwirbelungen in der Strömung erzeugt.

Dieses Problem wird erfindungsgemäß dadurch gelöst, daß ein Spalt zwischen dem Federelement und dem Rotor dieselbe Breite hat wie zwischen den Magnetschalen und dem Rotor.

Durch diese Gestaltung befindet sich zwischen dem Stator und dem Rotor ein kreisringförmiger Spalt mit weitgehend gleichbleibender Dicke. Damit werden Verwirbelungen in der Strömung zwischen dem Rotor und dem Stator besonders gering gehalten. Dadurch vermindert sich der Druckverlust beim Durchfluß des Mediums durch den Elektromotor. Hierdurch hat die erfindungsgemäße Pumpe einen besonders hohen Wirkungsgrad. Weiterhin führt die Verringerung der Verwirbelungen in der Strömung zu einer besonders geringen Geräuschemission der mit dem erfindungsgemäßen Elektromotor versehenen Fördereinheit.

Der erfindungsgemäße Elektromotor benötigt besonders wenige zu montierende Bauteile, wenn das Federelement zu dem Rotor hin eine im wesentlichen glatte, in Höhe der radial inneren Begrenzung der Magnetschalen angeordnete Fläche aufweist. Durch diese Gestaltung wird die radial innere Fläche der Magnetschalen durch die Federelemente fortgeführt, so daß der Stator an seiner dem Rotor zugewandten Seite eine mit den Magnetschalen abschließende Fläche aufweist. Deshalb lassen sich Verwirbelungen in der Strömung besonders gering halten. Dies führt zu einer starken Verringerung der Gasblasenbildung in der Strömung und zu einem besonders hohen Wirkungsgrad der Förderpumpe.

Bei einem einzigen Federelement zur Halterung von zwei Magnetschalen lassen sich Verwirbelungen innerhalb der Strömung besonders gering halten, wenn zum Abstützen der Magnetschalen vorgesehene Anschläge des Gehäuses des Stators von einer Blende verdeckt sind.

Die Verwirbelungen in der Strömung werden gemäß einer vorteilhaften Weiterbildung der Erfindung besonders gering gehalten, wenn sich das Federelement und die Blende der Anschläge über die gesamte Länge der Magnetschalen erstrecken.

Das Federelement des bekannten Elektromotors könnte beispielsweise in Höhe der radial inneren Begrenzung der Magnetschalen mit einer Blende versehen sein. Dies führt jedoch zu einer aufwendigen Gestaltung des Federelements. Weiterhin müßte die Blende gegen ein Lösen von dem Federelement gesichert sein, da eine Trennung von Blende und Federelement zu einem Blockieren des Elektromotors führen kann. Das Federelement benötigt gemäß einer anderen vorteilhaften Weiterbildung der Erfindung keine zusätzlich zu montierende Blende, wenn das Federelement einen entsprechend der radial inneren Begrenzung der Magnetschalen gestalteten bogenförmigen Abschnitt aufweist und wenn an beiden, den Magnetschalen zugewandten Seiten des bogenförmigen Abschnitts radial nach außen hin geführte Schenkel angeordnet sind.

Das Federelement läßt sich gemäß einer anderen vorteilhaften Weiterbildung der Erfindung besonders einfach montieren, wenn freie Enden der Schenkel zueinander hinweisend abgewinkelt sind.

Das Federelement ist gemäß einer anderen vorteilhaften Weiterbildung der Erfindung zuverlässig in einer vorgesehenen Position im Stator fixiert, wenn das Federelement einen C-förmigen, mit einem mittleren Bereich an einem rohrförmigen Gehäuse anliegenden Abschnitt hat und wenn sich an einem Ende des C-förmigen Abschnitts eine Blende im Bereich der Höhe der Magnetschalen angeordnet ist. Durch diese Gestaltung wird das Federelement durch seine Eigenelastizität radial nach außen hin vorgespannt.

Das freie Ende der Blende kann zuverlässig in seiner vorgesehenen, von dem Rotor entfernten Lage gehalten werden, wenn die Blende an dem zweiten freien Ende des C-förmigen Abschnitts abstützend gestaltet ist.

Das Federelement hat gemäß einer anderen vorteilhaften Weiterbildung der Erfindung eine besonders hohe Stabilität, wenn die Blende einen radial außen abstützenden Steg hat.

Der Stator läßt sich gemäß einer anderen vorteilhaften Weiterbildung der Erfindung an seiner dem Rotor zugewandten Seite besonders glatt gestalten, wenn das Federelement als Kunststofformteil ausgebildet ist.

Das als Kunststofformteil ausgebildete Federelement könnte beispielsweise rohrförmig gestaltet sein und die erforderliche Vorspannung durch die Form seiner Wandung erzeugen. Das Kunststofformteil gestaltet sich jedoch gemäß einer anderen vorteilhaften Weiterbildung der Erfindung konstruktiv besonders einfach, wenn das als Kunststoffformteil gestaltete Federelement massiv ist. Hierdurch werden die Magnetschalen durch die Elastizität des Materials des Kunststofformteils in ihre vorgesehene Lage gespannt.

Das Federelement könnte die Magnetschalen wie bei dem bekannten Elektromotor gegen Anschläge des Stators vorspannen. Nachteilig hierbei ist jedoch, daß die Anschläge zur Vermeidung von Verwirbelungen mit einer separat zu montierenden Blende abgedeckt werden müssen. Der erfindungsgemäße Elektromotor gestaltet sich jedoch konstruktiv besonders einfach, wenn der Anzahl der Magnetschalen entsprechend mehrere Federelemente zur Vorspannung der Magnetschalen gegen das Gehäuse vorgesehen sind. Durch diese Gestaltung ist jeweils an einander gegenüberstehenden seitlichen Begrenzungen der Magnetschalen ein Federelement angeordnet, so daß der Stator im einfachsten Fall keinen Anschlag für die Magnetschalen benötigt. Da hierdurch der Stator bei beispielsweise zwei Magnetschalen auch zwei Federelemente hat, lassen sich große Vorspannwege bei jeweils geringen Verformungen der Federelemente erreichen.

Die Erfindung läßt zahlreiche Ausführungsformen zu. Zur weiteren Verdeutlichung ihres Grundprinzips sind mehrere davon in der Zeichnung dargestellt und werden nachfolgend beschrieben. Diese zeigt in
- Fig.1: eine schematische Darstellung einer Fördereinheit mit einem erfindungsgemäßen Elektromotor im Längsschnitt,
- Fig.2: einen Querschnitt durch den Elektromotor aus Figur 1 entlang der Linie II - II,
- Fig.3 - 5: weitere Ausführungsformen des erfindungsgemäßen Elektromotors in Querschnitten.

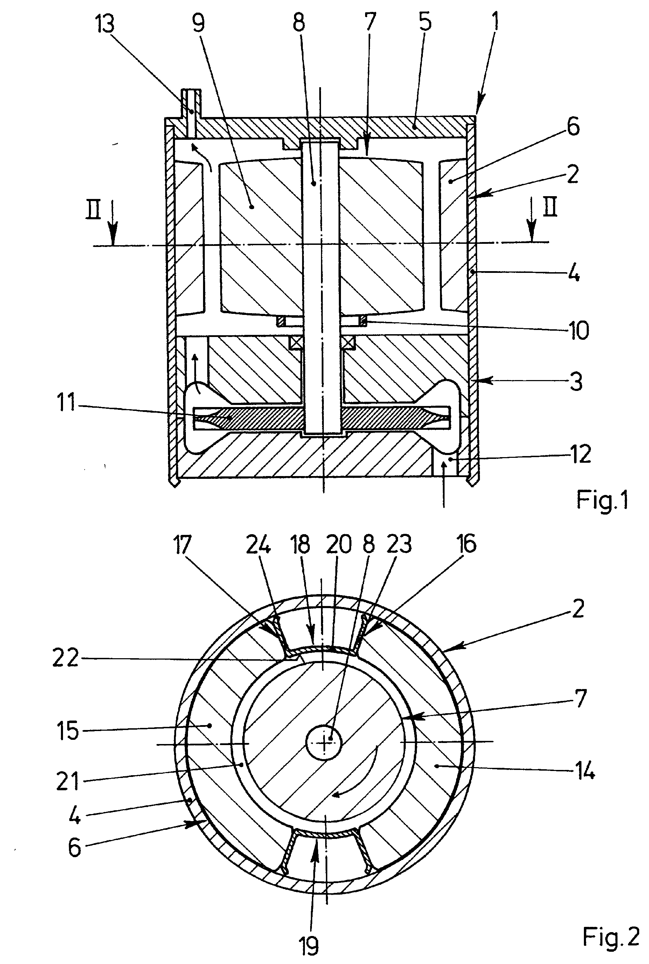

Die Figur 1 zeigt schematisch eine beispielsweise zum Fördern von Kraftstoff aus einem Kraftstoffbehälter eines Kraftfahrzeuges vorgesehene Fördereinheit 1 mit einer von einem erfindungsgemäßen Elektromotor 2 angetriebenen Förderpumpe 3. Die Fördereinheit 1 hat ein rohrförmiges Gehäuse 4, das auf seiner der Förderpumpe 3 gegenüberliegenden Seite von einem Lagerschild 5 verschlossen ist. Der Elektromotor 2 hat einen Stator 6 und einen Rotor 7 mit auf einer Welle 8 angeordneten Spulen 9. Der Rotor 7 hat zudem einen Läufer 10 zur Versorgung der Spulen 9 über nicht dargestellte Kohlebürsten mit elektrischem Strom. Auf der Welle 8 ist ein Laufrad 11 der Förderpumpe 3 drehfest angeordnet. Das Laufrad 11 dreht sich innerhalb des Gehäuses 4 und fördert Kraftstoff von einem Ansaugkanal 12 durch das Gehäuse 4 und den Elektromotor 2 zu einem im Lagerschild 5 angeordneten Anschlußstutzen 13. Zur Verdeutlichung ist die Strömung des Kraftstoffs in der Zeichnung mit Pfeilen gekennzeichnet.

Die Figur 2 zeigt in einer Schnittdarstellung durch den Elektromotor 2 aus Figur 1, daß der Elektromotor 2 insgesamt zwei Magnetschalen 14, 15 hat. Selbstverständlich kann ein solcher Elektromotor 2 auch mehr als zwei Magnetschalen 14, 15 aufweisen. Die Magnetschalen 14, 15 werden jeweils an ihren seitlichen Rändern 16, 17 von Federelementen 18, 19 voneinander weg gegen die innere Seite des Gehäuses 4 gespannt. Hierdurch sind die Magnetschalen 14, 15 in ihrer vorgesehenen Lage gehalten. Die Federelemente 18, 19 weisen an ihrer dem Rotor 7 zugewandten Seite einen bogenförmigen Abschnitt 20 auf und bilden mit den Magnetschalen 14, 15 die radial innere Begrenzung des Stators 6. Ein Spalt 21 zwischen dem Rotor 7 und dem Stator 6 hat hierdurch an jeder Stelle dieselbe Breite. Hierdurch und weil der Stator 6 eine an seiner dem Rotor 7 zugewandten Seite glatt gestaltete Fläche 22 aufweist, wird der durch den Spalt 21 geförderte Kraftstoff nur unwesentlich verwirbelt. Zur Vorspannung der Magnetschalen 14, 15 haben die Federelemente 18, 19 jeweils an ihren bogenförmigen Abschnitten 20 radial nach außen hin geführte Schenkel 23, 24. Die freien Enden der Schenkel 23, 24 sind zueinander hingebogen, so daß sich die Federelemente 18, 19 besonders einfach montieren lassen.

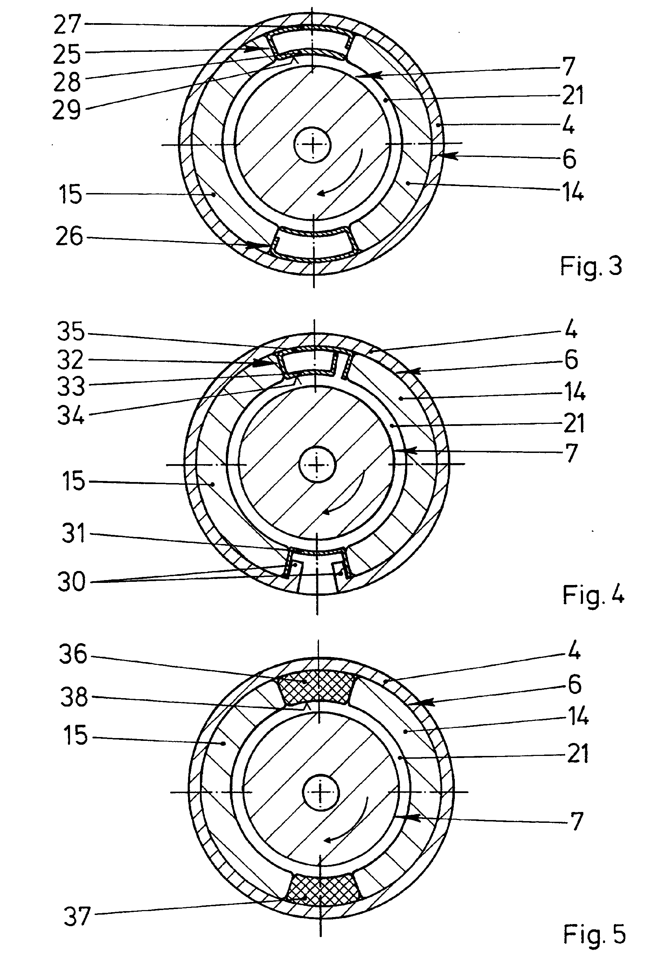

Die Figur 3 zeigt eine weitere Ausführungsform des erfindungsgemäßen Elektromotors im Querschnitt. Diese Ausführungsform unterscheidet sich von der aus Figur 2 im wesentlichen dadurch, daß die Magnetschalen 14, 15 von kastenförmigen Federelementen 25, 26 gehalten sind. Die Federelemente 25, 26 haben jeweils einen C-förmigen, mit einem mittleren Bereich an dem rohrförmigen Gehäuse 4 anliegenden Abschnitt 27. An einem Ende des C-förmigen Abschnitts 27 ist in Höhe der radial inneren Begrenzung der Magnetschalen 14, 15 eine Blende 28 angeordnet. Diese Blende 28 ist bis zu dem zweiten Ende des C-förmigen Abschnitts 27 des Federelements 25, 26 geführt und stützt sich an dieser Stelle ab. Die zum Rotor 7 hin weisende Seite der Blende 28 bildet damit eine glatte, in Höhe der radial inneren Begrenzung der Magnetschalen 14, 15 angeordnete Fläche 29.

Die Figur 4 zeigt eine weitere Ausführungsform des Elektromotors im Querschnitt, bei dem das Gehäuse 4 Anschläge 30 für die Magnetschalen 14, 15 hat.

Die Anschläge 30 sind von einer Blende 31 bedeckt. Auf der den Anschlägen 30 gegenüberliegenden Seite ist ein einziges Federelement 32, welches nicht Gegenstand der Erfindung ist, zur Vorspannung der Magnetschalen 14, 15 gegen die Anschläge 30 angeordnet. Das Federelement 32 hat eine radial nach außen hin abgewinkelte Blende 33. In ihrem dem Rotor 7 zugewandten Bereich hat die Blende 33 eine glatte Fläche 34. Die Blende 33 stützt sich mit ihrem freien Ende an einem an dem Gehäuse 4 anliegenden, C-förmigen Abschnitt 35 des Federelementes 32 ab.

Die Figur 5 zeigt eine weitere Ausführungsform des erfindungsgemäßen Elektromotors im Querschnitt, bei dem Federelemente 36, 37 als Kunststofformteile ausgebildet sind. Die Federelemente 36, 37 sind aus einem gummielastischen Material gefertigt und massiv gestaltet. Hierdurch werden die Magnetschalen 14, 15 durch die Eigenelastizität der Federelemente 36, 37 gehalten. In seinem dem Rotor 7 zugewandten Bereich weisen die Federelemente 36, 37 jeweils eine glatte, mit den Magnetschalen 14, 15 abschließende Fläche 38 auf.

## Patentansprüche

1. Förderpumpe mit einem zur Durchströmung mit Fluid vorgesehenen Elektromotor (2), insbesondere Kraftstoffpumpe für ein Kraftfahrzeug, mit einem Rotor (7) und einem zumindest zwei Magnetschalen (14, 15) aufweisenden Stator (6) und mit einem Federelement (18, 19, 25, 26, 36, 37) zur Vorspannung der Magnetschalen (14, 15) zu deren Halterung in ihrer vorgesehenen Lage in einem Gehäuse (4), **dadurch gekennzeichnet, daß** ein Spalt (21) zwischen dem Federelement (18, 19, 25, 26, 36, 37) und dem Rotor (7) zur Geringhaltung von Verwirbelungen in der Strömung dieselbe Breite hat wie zwischen den Magnetschalen (14, 15) und dem Rotor (7).

2. Elektromotor nach Anspruch 1, **dadurch gekennzeichnet, daß** das Federelement (18, 19, 25, 26, 36, 37) zu dem Rotor (7) hin eine im wesentlichen glatte, in Höhe der radial inneren Begrenzung der Magnetschalen (14, 15) angeordnete Fläche (22, 29, 34, 38) aufweist.

3. Elektromotor nach Anspruch 1 oder 2, **dadurch gekennzeichnet, daß** zum Abstützen der Magnetschalen (14, 15) vorgesehene Anschläge (30) des Gehäuses (4) des Stators (6) von einer Blende (31) verdeckt sind.

4. Elektromotor nach zumindest einem der vorhergehenden Ansprüche, **dadurch gekennzeichnet, daß** sich das Federelement (18, 19, 25, 26, 36, 37) und die Blende (31) der Anschläge (30) über die gesamte Länge der Magnetschalen (14, 15) erstrecken.

5. Elektromotor nach zumindest einem der vorhergehenden Ansprüche, **dadurch gekennzeichnet, daß** das Federelement (18, 19) einen entsprechend der radial inneren Begrenzung der Magnetschalen (14, 15) gestalteten, bogenförmigen Abschnitt (20) aufweist und daß an den beiden den Magnetschalen (14, 15) zugewandten Seiten des bogenförmigen Abschnitts (20) radial nach außen hin geführte Schenkel (23, 24) angeordnet sind.

6. Elektromotor nach zumindest einem der vorhergehenden Ansprüche, **dadurch gekennzeichnet, daß** freie Enden der Schenkel (23, 24) zueinander hinweisend abgewinkelt sind.

7. Elektromotor nach zumindest einem der vorhergehenden Ansprüche, **dadurch gekennzeichnet, daß** das Federelement (25, 26) einen C-förmigen, mit einem mittleren Bereich an einem rohrförmigen Gehäuse (4) anliegenden Abschnitt (27, 35) hat und daß sich an einem Ende des C-förmigen Abschnitts (27, 35) eine Blende (28, 33) im Bereich der Höhe der Magnetschalen (14, 15) angeordnet ist.

8. Elektromotor nach zumindest einem der vorhergehenden Ansprüche, **dadurch gekennzeichnet, daß** die Blende (28) an dem zweiten freien Ende des C-förmigen Abschnitts (27) abstützend gestaltet ist.

9. Elektromotor nach zumindest einem der vorhergehenden Ansprüche, **dadurch gekennzeichnet, daß** das Federelement (36, 37) als Kunststofformteil ausgebildet ist.

10. Elektromotor nach zumindest einem der vorhergehenden Ansprüche, **dadurch gekennzeichnet, daß** das als Kunststofformteil ausgebildete Federelement (36, 37) massiv ist.

11. Elektromotor nach zumindest einem der vorhergehenden Ansprüche, **dadurch gekennzeichnet, daß** der Anzahl der Magnetschalen (14, 15) entsprechend mehrere Federelemente (18, 19, 25, 26, 36, 37) zur Vorspannung der Magnetschalen (14) gegen das Gehäuse (4) vorgesehen sind.

## Claims

1. Feed pump having an electric motor (2) through which fluid is intended to flow, in particular a fuel pump for a motor vehicle, having a rotor (7) and a stator (6) which has at least two magnetic shells (14, 15) and having a spring element (18, 19, 25, 26, 36, 37) for prestressing the magnetic shells (14, 15) in order that said magnetic shells are held in their intended position in a housing (4), **characterized in that** a gap (21) between the spring element (18, 19, 25, 26, 36, 37) and the rotor (7) for keeping eddy currents in the fluid flow low has the same width as the gap between the magnetic shells (14, 15) and the rotor (7).

2. Electric motor according to Claim 1, **characterized in that** the spring element (18, 19, 25, 26, 36, 37) has a substantially smooth area (22, 29, 34, 38) which is arranged level with the radially inner boundary of the magnetic shells (14, 15) in the direction of the rotor (7).

3. Electric motor according to Claim 1 or 2, **characterized in that** stops (30) of the housing (4) of the stator (6), which stops are intended to support the magnetic shells (14, 15), are covered by a diaphragm (31).

4. Electric motor according to at least one of the preceding claims, **characterized in that** the spring element (18, 19, 25, 26, 36, 37) and the diaphragm (31) of the stops (30) extend over the entire length of the magnetic shells (14, 15).

5. Electric motor according to at least one of the preceding claims, **characterized in that** the spring element (18, 19) has an arcuate section (20) which is designed to correspond to the radially inner boundary of the magnetic shells (14, 15), and **in that** limbs (23, 24) which are guided radially outward are arranged on the two sides of the arcuate section (20) which face the magnetic shells (14, 15).

6. Electric motor according to at least one of the preceding claims, **characterized in that** the free ends of the limbs (23, 24) are angled so as to face one another.

7. Electric motor according to at least one of the preceding claims, **characterized in that** the spring element (25, 26) has a C-shaped section (27, 35) which rests against a tubular housing (4) by way of a central region, and **in that** a diaphragm (28, 33) is arranged in the region of the level of the magnetic shells (14, 15) at one end of the C-shaped section (27, 35).

8. Electric motor according to at least one of the preceding claims, **characterized in that** the diaphragm (28) is designed to be supported against the second free end of the C-shaped section (27).

9. Electric motor according to at least one of the preceding claims, **characterized in that** the spring element (36, 37) is in the form of a shaped plastic part.

10. Electric motor according to at least one of the preceding claims, **characterized in that** the spring element (36, 37) which is in the form of a shaped plastic part is solid.

11. Electric motor according to at least one of the preceding claims, **characterized in that** a plurality of spring elements (18, 19, 25, 26, 36, 37) for prestressing the magnetic shells (14) against the housing (4) are provided in accordance with the number of magnetic shells (14, 15).

## Revendications

1. Pompe d'alimentation comportant un moteur électrique (2) prévu pour être traversé par un fluide, notamment pompe à carburant pour véhicule automobile, comportant un rotor (7) et un stator (6) avec au moins deux coquilles magnétiques (14, 15) et un organe élastique (18, 19, 25, 26, 36, 37) permettant de soumettre les coquilles magnétiques (14, 15) à une force de contrainte pour assurer leur fixation dans leur position prévue dans un boîtier (4), **caractérisé par le fait que**, pour maintenir faibles les tourbillonnements dans le courant du fluide, un interstice (21) entre l'organe élastique (18, 19, 25, 26, 36, 37) et le rotor (7) a la même largeur que l'interstice entre les coquilles magnétiques (14, 15) et le rotor (7).

2. Moteur électrique selon la revendication 1, **caractérisé par le fait que** l'organe élastique (18, 19, 25, 26, 36, 37) a, dans la direction du rotor (7), une surface (22, 29, 34, 38) essentiellement lisse disposée à la hauteur de la limite intérieure dans le sens radial des coquilles magnétiques (14, 15).

3. Moteur électrique selon la revendication 1 ou 2, **caractérisé par le fait que** des butées (30) du boîtier (4) du stator (6), prévues pour soutenir les coquilles magnétiques (14, 15), sont recouvertes par un écran (31).

4. Moteur électrique selon au moins l'une des revendications précédentes, **caractérisé par le fait que** l'organe élastique (18, 19, 25, 26, 36, 37) et l'écran (31) des butées (30) s'étendent sur toute la longueur des coquilles magnétiques (14, 15).

5. Moteur électrique selon au moins l'une des revendications précédentes, **caractérisé par le fait que** l'organe élastique (18, 19) comporte une section (20) en forme d'arc réalisée d'une façon correspondant à la limite intérieure dans le sens radial des coquilles magnétiques (14, 15) et que, sur les deux côtés de la section (20) en forme d'arc tournés vers les coquilles magnétiques (14, 15), sont disposées des branches (23, 24) orientées vers l'extérieur dans le sens radial.

6. Moteur électrique selon au moins l'une des revendications précédentes, **caractérisé par le fait que** des extrémités libres des branches (23, 24) sont coudées l'une vers l'autre.

7. Moteur électrique selon au moins l'une des revendications précédentes, **caractérisé par le fait que** l'organe élastique (25, 26) a une partie (27, 35) en forme de C appliquée par sa partie centrale sur un boîtier (4) en forme de tube et que, à l'une des extrémités de la partie (27, 35) en forme de C, est placé un écran (28, 33) dans la zone de la hauteur des coquilles magnétiques (14, 15).

8. Moteur électrique selon au moins l'une des revendications précédentes, **caractérisé par le fait que** l'écran (28) est réalisé avec un appui à la deuxième extrémité libre de la partie (27) en forme de C.

9. Moteur électrique selon au moins l'une des revendications précédentes, **caractérisé par le fait que** l'organe élastique (36, 37) est réalisé sous la forme de pièce moulée en matière plastique.

10. Moteur électrique selon au moins l'une des revendications précédentes, **caractérisé par le fait que** l'organe élastique (36, 37) réalisé sous la forme de pièce moulée en matière plastique est compact.

11. Moteur électrique selon au moins l'une des revendications précédentes, **caractérisé par le fait que**, conformément au nombre de coquilles magnétiques (14, 15), il est prévu plusieurs organes élastiques (18, 19, 25, 26, 36, 37) pour soumettre les coquilles magnétiques (14) à une force de contrainte contre le boîtier (4).
